# EUROPEAN PATENT SPECIFICATION

(11) **EP 1 355 952 B1**
(45) Date of publication and mention of the grant of the patent: **23.08.2006**
(21) Application number: 01983847.3
(22) Date of filing: 09.11.2001
(51) Int. Cl.: C08F 4/616, C08F 4/651, C08F 10/00

(54) **METHOD FOR PRODUCING A CATALYST FOR HOMO- OR CO- POLYMERIZATION OF ETHYLENE**
VERFAHREN ZUR HERSTELLUNG EINES KATALYSATORS FÜR DIE HOMO- ODER COPOLYMERISATION VON ETHYLEN
PROCEDE PERMETTANT DE PRODUIRE UN CATALYSEUR POUR L'HOMO OU LA COPOLYMERISATION D'ETHYLENE

(30) Priority: 09.11.2000 KR 2000066411
(43) Date of publication of application: 29.10.2003
(73) Proprietor: Samsung General Chemicals Co., Ltd., Seosan-shi, Chungnam Province 356-870 (KR)
(72) Inventor: YANG, Chun-Byung, Daejon 305-390 (KR); KIM, Won-Young, Daejon 305-390 (KR); LEE, Weon, Taejon 305-390 (KR)
(74) Representative: Zinnecker, Armin
(86) International application number: PCT/KR2001/001904
(87) International publication number: WO 2002/038619

(56) References cited:
- WO-A-01/40320
- WO-A-98/44009
- KR-A- 94 026 081
- KR-A- 97 042 616
- KR-A- 99 010 007
- KR-A- 2000 045 584

## Description

### Technical Field

The present invention provides a method for producing a catalyst for homo-polymerization or co-polymerization of ethylene, or more particularly a method for producing a high-activity titanium solid complex catalyst supported on a carrier containing magnesium, wherein said catalyst is capable of producing polymers of high bulk density and narrow particle size distribution with low content of fine particles.

### Background of the Invention

Catalysts containing magnesium for polymerization or co-polymerization of ethylene are known to have very high catalytic activities and to accord polymers of high bulk density, which are suitable for liquid phase or gas phase polymerization. By liquid phase polymerization of ethylene, it denotes a polymerization process performed in a medium such as bulk ethylene, isopentane, or hexane, and as for the important characteristics of catalysts used in this process, there are as follows: high catalytic activity, bulk density of the resultant polymers, the content of low molecular weight molecules of the resultant polymers dissolved in a medium, the particle distribution of the resultant polymers, and the existence of fine particles within the resultant polymers.

Many of the titanium-based catalysts containing magnesium for olefin polymerization, and the manufacturing methods thereof have been reported. Especially, many processes making use of magnesium solutions to obtain catalysts which can generate olefin polymers of high bulk density have been known. There is a means of obtaining a magnesium solution by reacting magnesium compounds with such electron donors as alcohol, amine, cyclic ether, or organic carboxylic acid in the presence of a hydrocarbon solvent. As for the cases of use of alcohol, they are disclosed in US Patent Nos. 3,642,746, 4,336,360, 4,330,649, and 5,106,807. Further, the methods for the production of catalysts containing magnesium by reacting the said liquid-phase magnesium solution with a halogenated compound such as titanium tetrachloride are well known. Such catalysts provide high bulk density to the resultant polymers, but there is much yet to be improved with respect to their catalytic activities or hydrogen reactivities. Moreover, tetrahydrofuran, a cyclic ester, has been used as a solvent for a magnesium compound in US Patent Nos. 4,477,639 and 4,518,706.

Meanwhile, US Patent Nos. 4,847,227, 4,816,433, 4,829,037, 4,970,186, and 5,130,284 have reported the use of such electron donors as dialkylphthalate, phthaloyl chloride, etc. in reaction with the titanium chloride compound for the production of olefin polymerization catalysts of superior polymerization activity, which are capable of enhancing the bulk density of resultant polymers.

US Patent No. 5,459,116 has reported a method of production of a titanium solid catalyst by contact-reacting a magnesium solution containing an ester having at least one hydroxyl group as an electron donor with a titanium compound. By this method, it is possible to obtain a catalyst of high polymerization activity, which accords high bulk density to resultant polymers, but there is room for yet more improvements.

As shown above, there is a need for the development of new catalysts for homo-polymerization or co-polymerization of ethylene for producing polymers with the following characteristics: a simple manufacturing process, high polymerization activity, high bulk density for polymers by means of controlling the catalyst particles, and in particular, a narrow particle size distribution with few fine particles. In the present invention, therefore, it is intended to provide a method of producing, from low-cost compounds via a simple process, a catalyst having excellent catalytic activity, capable of producing polymers of high bulk density and narrow particle size distribution with few fine particles. Further, the specific production process of catalysts and the steps thereof as disclosed in the present invention have never been reported in the prior art.

### Summary of the Invention

Consequently, the objective of the present invention is to provide a new method for producing a catalyst for homo-polymerization or co-polymerization of ethylene, wherein said catalyst has high catalytic activity, which is capable of producing polymers of high bulk density and narrow particle size distribution with few fine particles.

Another objective of the present invention is to provide a simple process for producing a catalyst for homo-polymerization or co-polymerization of ethylene.

Still other objectives and the utility of the present invention will become apparent as references are made with respect to the following descriptions and the claims thereto.

### Detailed Description of the Preferred Embodiments

The catalyst for homo-polymerization or co-polymerization of ethylene according to the present invention is produced by a simple yet efficient manufacturing process, which comprises (i) preparing a magnesium solution by contact-reacting a halogenated magnesium compound with alcohol, and adding mineral oil to adjust the viscosity of said magnesium solution; (ii) reacting said solution with an ester compound having at least one hydroxyl group and a silicon compound having at least one alkoxy group; and (iii) producing a solid titanium catalyst by adding a mixture of a titanium compound and a silicon compound

Types of halogenated magnesium compounds used in the present invention are as follows: di-halogenated magnesiums such as magnesium chloride, magnesium iodide, magnesium fluoride, and magnesium bromide; alkymagnesium halides such as methylmagnesium halide, ethylmagnesium halide, propylmagnesium halide, butylinagnesium halide, isobutylmagnesium halide, hexylmagnesium halide, and amylmagnesium halide; alkoxymagnesium halides such as methoxymagnesium halide, ethoxymagensium halide, isopropoxymagnesium halide, butoxymagnesium halide, octoxymagnesium halide; and aryloxymagnesium halides such as phenoxymagnesium halide and methyl-phenoxymagnesium halide. Of the above magnesium compounds, two or more compounds can be used in a mixture. Further, the above magnesium compounds can be effectively used in the form of a complex compound with other metals.

Of the compounds listed above, some can be represented by a simple formula, but the others cannot be so represented depending on the production methods of magnesium compounds. In the latter cases, it can be generally regarded as a mixture of some of the listed compounds. For example, the following compounds can be used in the present invention: such compounds obtained by reacting magnesium compounds with polysilolxane compounds, silane compounds containing halogen, ester, or alcohol; and such compounds obtained by reacting magnesium metals with alcohol, phenol, or ether in the presence of halosilane, phosphorus pentachloride, or thionyl chloride. However, the preferable magnesium compounds are magnesium halides, especially magnesium chloride or alkylmagnesium chloride, preferably those having respectively an alkyl group of 1∼ 10 carbons; alkoxymagnesium chlorides, preferably those having respectively 1~10 carbons; and aryloxymagnesium chlorides, preferably those having respectively 6 ~ 20 carbons. The magnesium solution used in the present invention can be produced as solution by using the aforementioned magnesium compounds in the presence a hydrocarbon solvent or in the absence thereof, in an alcohol solvent

As to the types of hydrocarbon solvents used in the present invention, they include aliphatic hydrocarbons such as pentane, hexane, heptane, octane, decane, and kerosene; alicyclic hydrocarbons such as cyclobenzene, methylcyclobenzene, cyclohexane, and methylcyclohexane; aromatic hydrocarbons such as benzene, toluene, xylene, ethylbenzene, cumene, and cymene; and halogenated hydrocarbons such as dichloropropane, dichloroethylene, trichloroethylene, carbon tetrachloride, and chlorobenzene.

When a magnesium compound is converted into a magnesium solution, alcohol is used in the presence of the aforementioned hydrocarbons or in the absence thereof. The types of alcohol include those containing 1 ~ 20 carbon atoms, such as methanol, ethanol, propanol, butanol, pentanol, hexanol, octanol, decanol, dodecanol, octadecyl alcohol, benzyl alcohol, phenylethyl alcohol, isopropyl benzyl alcohol, and cumyl-alcohol, although alcohol containing 1 ~ 12 carbon atoms is preferable. The average size of a target catalyst and its particle distribution can vary according to the types of alcohol, the total contents, the types of magnesium compounds, and the ratio of magnesium to alcohol, etc. Nevertheless, the total amount of alcohol required to obtain the magnesium solution is at least 0.5 mol per each mole of magnesium compounds, preferably 1.0 ~ 20 mol, or more preferably 2.0 ~ 10 mol.

During the production of magnesium solution, the reaction of a magnesium compound with alcohol is preferably carried out in the presence of a hydrocarbon medium. The reaction temperature, while variable depending on the types and the amount of alcohol, is at least 25°C, preferably -10 ∼ 200°C, or more preferably 0 ~ 150°C. It is preferable to carry out the reaction for 15 minutes ∼ 5 hours, preferably for 30 minutes ∼ 4 hours.

In order to adjust the viscosity of the magnesium solution produced according to the present invention, mineral oil is used. By adjusting the viscosity of the magnesium solution, shapes, particle size and distribution of catalysts can be more easily controlled. Accordingly, it was discovered that by using said catalyst the bulk density and the particle distribution of the resultant polymers could be improved.

As for the types of mineral oil, white oil, parafinic hydrocarbon oil (e.g., Nujol), or silicone oil can be used. The viscosity of mineral oil used in the present invention is 5-85 centistoke at 40°C, or preferably 60-75 centistoke.

Of the electron donors used in the present invention, the ester compounds respectively having at least one hydroxyl group include unsaturated aliphatic acid esters respectively having at least one hydroxyl group, such as 2-hydroxy ethylacrylate, 2-hydroxy ethylmethacrylate, 2-hydroxypropyl acrylate, 2-hydroxypropylmethacrylate, 4-hydroxy butylacrylate, pentaerythritol triacrylate; aliphatic monoesters or polyesters respectively having at least one hydroxyl group, such as 2-hydroxy ethyl acetate, methyl 3-hydroxy butylate, ethyl 3-hydroxy butylate, methyl 2-hydroxy isobutylate, ethyl 2-hydroxy isobutylate, methyl-3-hydroxy-2-methyl propionate, 2,2-dimethyl-3-hydroxy propionate, ethyl-6-hydroxy hexanoate, t-butyl-2-hydroxy isobutylate, diethyl-3-hydroxy glutarate, ethyl lactate, isopropyl lactate, butyl isobutyl lactate, isobutyl lactate, ethyl mandelate, dimethyl ethyl tartrate, ethyl tartrate, dibutyl tartrate, diethyl citrate, triethyl citrate, ethyl-2-hydroxy-caproate, diethyl *bis*-(hydroxy methyl) malonate; aromatic esters respectively having at least one hydroxyl group, such as 2-hydroxy ethyl benzoate, 2-hydroxy ethyl salicylate, methyl-4-(hydroxy methyl) benzoate, methyl 4-hydroxy benzoate, ethyl 3-hydroxy benzoate, 4-methyl salicylate, ethyl salicylate, phenyl salicylate, propyl 4-hydroxy benzoate, phenyl 3-hydroxy naphthanoate, monoethylene glycol monobenzoate, diethylene glycol monobenzoate, triethylene glycol monobenzoate; alicyclic esters respectively having at least one hydroxyl group, such as hydroxybutyl lactone. The amount of the ester compound having at least one hydroxyl group should be 0.001 ∼ 5 mol per mole of magnesium, or preferably 0.01 ~ 2 mol per mole of magnesium.

For the silicon compound having at least one alkoxy group, which can be used as another electron donor in the present invention, a compound which is represented by a general formula of RₙSi(OR)₄-n (here R is a hydrocarbon having 1~12 carbons, while "n" is a natural number from 0 to 3) is preferable. In particular, the following compounds can be used: dimethyldimethoxysilane, dimethyldiethoxysilane, diphenyldimethoxysilane, methylphenylmethoxysilane, diphenyldiethoxysilane, ethyltrimethoxysilane, vinyltrimethoxysilane, methyltrimethoxysilane, phenyltrimethoxysilane, methyltriethoxysilane, ethyltriethoxysilane, vinyltriethoxysilane, butyltriethoxysilane, phenyltriethoxysilane, ethyltriisopropoxysilane, vinyltributoxysilane, ethylsilicate, butylsilicate, methyltriaryloxysilane, etc. The amount of said compound is preferably 0.05∼3mol per mole of magnesium, or more preferably 0.1~2mol.

As for the temperature for the contact-reaction of the magnesium solution, an ester compound having at least one hydroxyl group, and an alkoxy silicon compound, the temperature of 0 ~ 100°C is appropriate, or more preferably 10 ~ 70°C.

For recrystalization of catalyst particles, the magnesium compound solution obtained as such is reacted with a mixture of a liquid titanium compound represented by a general formula of Ti(OR)ₐX₄₋ₐ (here R is a hydrocarbon group, X a halogen atom, "a" a natural number from 0 to 4) and a compound represented by a general formula of RₙSiCl₄₋ₙ (here R is hydrogen, an alkyl group, an alkoxy, haloalkyl, or aryl group having 1∼10 carbons, or halosilyl or a halosilylalkyl group having 1∼8 carbons, and "n" a natural number from 0 to 3). In the general formula, R is an alkyl group having 1∼10 carbon atoms.

The types of titanium compounds which satisfy the general formula include 4-halogenated titanium such as TiCl₄, TiBr₄, and TiI₄; 3-halogenated alkoxy-titanium such as Ti(OCH₃)Cl₃, Ti(OC₂H₅)l₃, Ti(OC₂H₅)Br₃, and Ti(O(i-C₄H₉))Br₃; 2-halogenated alkoxy-titanium compounds such as Ti(OCH₃)₂Cl₂, Ti(OC₂H₅)₂Cl₂, Ti(O(i-C₄H₉))₂Cl₂, and Ti(OC₂H₅)₂Br₂; and tetra-alkoxy titanium such as Ti(OCH₃)₄, Ti(OC₂H₅)₄, and Ti(OC₄H₉)4. A mixture of the above titanium compounds can also be used in the present invention. However, the preferable titanium compounds are those containing respectively halogen, or more preferably titanium tetrachloride.

The types of silicon compounds satisfying the above general formula of RₙSiCl₄₋ₙ (here R is hydrogen, an alkyl group, an alkoxy, haloalkyl, or aryl group having 1~10 carbons, or halosilyl or a halosilylalkyl group having 1~8 carbons, and "n" a natural number from 0 to 3) include silicon tetrachloride; trichlorosilanes such as methyltrichlorosilane, ethyltrichlorosilane, phenyltrichlorosilane; dichlorosilanes such as dimethyldichlorosilane, diethyldichlorosilane, diphenyldichlorosilane, and methylphenyldichlorosilane; monochlorosilanes such as trimethylchlorosilane; and a mixture of these silicon compounds can also be used in the present invention, or more preferably silicon tetrachloride can be used.

The amount of mixture of a titanium compound and a silicon compound used during recrystallization of magnesium compound solution is appropriately 0.1 ~ 200 mol per mole of magnesium compounds, preferably 0.1 ~ 100 mol, or more preferably 0.2 ∼ 80 mol. The molar ratio of the titanium compound to the silicon compound in mixture is appropriately 1:0.05 ∼ 0.95, or more preferably 1:0.1 ∼ 0.8.

When the magnesium compound solution is reacted with the mixture of a titanium compound and a silicon compound, the shapes and the sizes of the resultant re-crystallized solid constituents vary a great deal according to the reaction conditions. Hence, the reaction of the magnesium compound solution with the mixture of a titanium compound and a silicon compound should be carried out preferably at a sufficiently low temperature to result in formation of solid constituents. More preferably, the reaction should be carried out by contact-reaction at -70~70°C, or most preferably at -50~50°C. After the contact-reaction, the reacting temperature is slowly raised for sufficient reaction for the duration of 0.5 ∼ 5 hours at 50 ∼ 150°C.

The particles of said solid catalysts obtained during the above process can be further reacted with the titanium compounds. These titanium compounds are titanium halides or halogenated alkoxy titaniums respectively with an alkoxy functional group of 1 ∼ 20 carbons. At times, a mixture of these compounds can also be used. Of these compounds, however, a titanium halide or a halogenated alkoxy titanium compound having an alkoxy functional group of 1-8 carbons can be appropriately used, or more preferably a titanium tetrahalide can be used.

The catalyst produced according to the process of the present invention can be utilized for homo- or co-polymerization of ethylene. In particular, the catalyst is used in homo-polymerization of ethylene, and also in co-polymerization of ethylene and α-olefin such as propylene, 1-butene, 1-pentene, 4-methyl-1-pentene, or 1-hexene having three or more carbons.

The polymerization reaction in the presence of a catalyst in the present invention is carried out by means of using (i) a solid complex titanium catalyst of the present invention, comprising magnesium, titanium, halogen, and an electron donor, and (ii) a catalyst system comprising compounds of organic metals of Groups II or III of the Periodic Table.

In the present invention, the solid complex titanium catalyst constituent can be used as a component in the polymerization reaction after pre-polymerization with ethylene or α-olefin. The pre-polymerization can be carried out in the presence of a hydrocarbon solvent such as hexane, at a sufficiently low temperature, with ethylene or α-olefin under pressure, in the presence of the above catalyst constituent and such organic aluminium compound as triethylaluminium. The pre-polymerization, by maintaining the shapes of catalysts by surrounding the catalyst particles with polymers, is helpful in producing good-quality post-polymerization shapes of polymers. The weight ratio of polymers to catalysts after pre-polymerization is ordinarily 0.1:1 ~ 20:1.

The organometallic compound in the present invention can be represented by a general formula of MRₙ, wherein, M stands for a metal constituent of Group II or IIIA in the Periodic Table, such as magnesium, calcium, zinc, boron, aluminium, and gallium, R for an alkyl group with 1 ~ 20 carbons, such as a methyl, ethyl, butyl, hexyl, octyl, or decyl group, and n for the atomic valence of the metal constituent As for more preferable organometallic compounds, a trialkyl aluminium having an alkyl group of 1 ∼ 6 carbons, such as triethylaluminium and triisobutylaluminium, or the mixture thereof can be utilized. On occasions, an organic aluminium compound having one or more halogen or hydride groups, such as ethylaluminium dichloride, diethylaluminium chloride, ethylaluminium *sesqui*chloride, or diisobutylaluminium hydride can also be used.

As for the polymerization reaction, it is possible to carry out either the gas phase or bulk polymerization in the absence of an organic solvent, or the liquid slurry polymerization in the presence of an organic solvent These polymerization methods, however, are carried out in the absence of oxygen, water, or other compounds that may act as catalytic poison.

The concentration of the solid complex titanium catalyst (i) with respect to the polymerization reaction system, in case of liquid phase slurry polymerization, is 0.001 ∼ 5 mmol in terms of titanium atoms in catalyst per one liter of the solvent, or more preferably 0.001 ∼ 0.5 mmol. As for the solvent, the following compounds or the mixtures thereof can be used: alkanes such as pentane, hexane, heptane, n-octane, isooctane, cyclohexane, methylcyclohexane; alkylaromatics such as toluene, xylene, ethylbenzene, isopropylbenzene, ethyltoluene, n-propylbenzene, diethylbenzene; halogenated aromatics such as chlorobenzene, chloronaphthalene, ortho-dichlorobenzene; and the mixtures thereof. In the case of gas phase polymerization, the amount of the solid complex titanium catalyst (i) should be approximately 0.001 ∼ 5 mmol in terms of titanium atoms in catalyst per one liter of the polymerization reactant, preferably 0.001 ∼ 1.0 mmol, or more preferably 0.01 ~ 0.5 mmol. The preferable concentration of the organometallic compound (ii), as calculated by organometallic atom, is 1 ∼ 2,000 mol per mole of titanium atoms in catalyst (i), or more preferably 5 ~ 500 mol.

To secure a high reaction rate of polymerization, the polymerization herein is carried out at a sufficiently high temperature, regardless of the polymerization process. Generally, the temperature of 20 ~ 200°C is appropriate, or more preferably 20 ∼ 95°C. The appropriate pressure of monomers at the time of polymerization is the atmospheric to 100 atm, or more preferably 2 ~ 50 atm.

In the present invention, the changes in the molecular weight according to the amount of hydrogen consumption at the time of polymerization are shown as melt index (ASTM D 1238), which is generally known in the art. The value of the melt index generally becomes greater as the molecular weight decreases.

The products obtained by the method of polymerization of the present invention are solid ethylene homo-polymers or the copolymers of ethylene and α-olefin, which have excellent bulk density and fluidity. Since the yields of polymer are sufficiently high, there is no need for the removal of catalyst residues.

The present invention is further described by means of the examples and comparative examples as below but should not be confined or limited to these examples.

### EXAMPLE 1

A solid complex titanium catalyst was produced by means of the following three steps:
(i) Step : Production of magnesium solution
   Into a 1.0L reactor equipped with a mechanical stirrer, replaced with nitrogen atmosphere, 9.5 g of MgCl₂ and 200 ml of decane were placed therein. After they were stirred at 300 rpm, 70 ml of 2-ethyl hexanol was added thereto. The temperature was raised to 120°C, and then the reaction was allowed to continue for three hours. The homogenous solution, which was obtained after the reaction, was cooled to room temperature, and then 100ml of mineral oil (Kaydol produced by Witco, Inc. (US);white mineral oil, with viscosity of 63-70 centistoke at 40°C) was added thereto, followed by stirring for one hour.
(ii) Step : Contact-reaction of magnesium solution, ester containing a hydroxyl group and alkoxy silane compound
   To the magnesium solution, cooled to room temperature as above (25°C), 1.4 ml of 2-hydroxyethyl methacrylate and 14.0 ml of silicon tetraethoxide were added, and then the reaction was allowed to continue for an hour.
(iii) Step: Treatment of mixture of titanium compound and silicon compound
   Into the above solution, a solution mixture of 50 ml of titanium tetrachloride and 50 ml of silicon tetrachloride was dripped thereto for one hour at room temperature. After completing the dripping process, the temperature of the reactor was raised to 70°C during stirring, after which was maintained at that temperature for one hour. Then, the temperature of the reactor was lowered to room temperature, and after stop stirring, the supernatant of the solution was removed, and the remaining solid layer was continuously instilled with 300 ml of decane and 300 ml of titanium tetrachloride. There, the temperature was raised to 100°C and maintained thereat for two hours. After the reaction, the reactor was cooled to room temperature and was instilled with 400 ml of hexane for washing until the removal of free unreacted titanium tetrachloride. The titanium content of the solid catalyst so produced was 5.6wt %.

### Polymerization

A 2-L high-pressure reactor was dried in an oven and assembled while hot. In order to make the inside of the reactor nitrogen atmosphere, nitrogen and vacuum were alternatively manipulated three times in the reactor. It was then instilled with 1,000 ml of n-hexane, after which 1 mmol of triethylaluminium and the above solid catalyst by 0.03 mmol in terms of titanium atoms were added thereto. Then, 2,000 ml of hydrogen was added. The temperature of the reactor was raised to 80°C while stirring at 700 rpm. The pressure of ethylene was adjusted to 100 psi, and the polymerization was allowed to continue for an hour. After the polymerization, the temperature of the reactor was lowered to room temperature, and an excessive amount of ethanol solution was added to the polymerized matters. The polymer thus produced was collected by separation and was dried in an oven at 50°C for at least six hours, whereby polyethylene was obtained in the form of white powder.

The polymerization activity (kg of polyethylene divided by gram of catalyst) was calculated as the weight (kg) ratio of the polymers as produced per the amount of catalysts so used (gram of catalyst). The results of polymerization are shown in Table 1, together with the bulk density (g/ ml) of the polymers, and the melt index (g/10 minutes).

### EXAMPLE 2

As in Step (i) of Example 1, 100ml of decane was used while producing magnesium solution under the same conditions. Then, 200ml of mineral oil was added thereto for adjusting the viscosity therein to produce catalysts as in Example 1. The titanium content of the catalyst thus produced was 5.2wt%. The polymerization was carried out as in Example 1, and the results thereof are shown in Table 1.

### EXAMPLE 3

As in Step (i) of Example 1, 150ml of decane was used while producing magnesium solution under the same conditions. Then, 150ml of mineral oil was added thereto for adjusting the viscosity therein to produce catalysts as in Example 1. The titanium content of the catalyst thus produced was 4.8wt%. The polymerization was carried out as in Example 1, and the results thereof are shown in Table 1.

### EXAMPLE 4

As in Step (i) of Example 1,200ml of decane with 100ml of mineral oil were used while producing magnesium solution under the same conditions, and thus the catalysts were produced as in Example 1. The titanium content of the catalyst thus produced was 5.1wt%. The polymerization was carried out as in Example 1, and the results thereof are shown in Table 1.

### COMPARATIVE EXAMPLE 1

As in Step (i) of Example 1, 300ml of decane was used while producing magnesium solution under the same conditions, and thus the catalysts were produced as in Example 1 without adding mineral oil. The titanium content of the catalyst thus produced was 4.8wt%. The polymerization was carried out as in Example 1, and the results thereof are shown in Table 1.

**Table 1 Results of Polymerization**

| Example | Activity (kgPE/ g of catalyst) | Bulk Density (g/ml) | Melting Index (g/10min) | Distribution of Polymer Particles (wt%) | | | | | | |
|---|---|---|---|---|---|---|---|---|---|---|
| | | | | 840 µm | 500 µm | 250 µm | 177 µm | 105 µm | 74 µm | <44 µm |
| 1 | 4.1 | 0.40 | 3.52 | 0.0 | 02 | 3.4 | 21.2 | 63.8 | 10.8 | 0.6 |
| 2 | 4.2 | 0.39 | 3.73 | 0.0 | 0.4 | 4.8 | 27.2 | 51.0 | 15.4 | 1.2 |
| 3 | 4.0 | 0.41 | 3.67 | 0.0 | 0.0 | 7.2 | 24.8 | 49.2 | 17.2 | 0.8 |
| 4 | 4.0 | 0.39 | 3.83 | 0.0 | 0.3 | 6.9 | 22.9 | 54.3 | 14.9 | 0.7 |
| CE*1 | 3.8 | 0.36 | 3.21 | 1.2 | 8.6 | 12.4 | 17.8 | 44.8 | 12.8 | 2.4 |

| | | | | | | | | | | |
|---|---|---|---|---|---|---|---|---|---|---|
| * CE : Comparative Examples | | | | | | | | | | |

As shown above, by way of the production process according to the present invention, it is possible to produce a new catalyst of high polymerization activity for homo- and co-polymerization of ethylene, which can produce polymers of high bulk density with few fine particles.

## Claims

1. A method for producing a catalyst for homo- or co-polymerization of ethylene, which comprises the steps of:
(i) preparing a magnesium solution by contact-reacting a halogenated magnesium compound with alcohol and then adding mineral oil thereto;
(ii) reacting said solution with an ester compound having at least one hydroxyl group and a silicon compound having at least one alkoxy group; and
(iii) reacting said solution with a mixture of a titanium compound and a silicon compound.

2. The method for producing a catalyst for homo- or co-polymerization of ethylene according to Claim 1, wherein said mineral oil is white oil, parafinic hydrocarbon oil, or silicone oil.

3. The method for producing a catalyst for homo- or co-polymerization of ethylene according to Claim 1, wherein said ester compound having at least one hydroxyl group is an unsaturated aliphatic acid ester having at least one hydroxyl group, which is selected from the group consisting of 2-hydroxy ethylacrylate, 2-hydroxy ethylmethacrylate, 2-hydroxy propyl acrylate, 2-hydroxy propylmethacrylate, 4-hydroxy butylacrylate, and pentaerythritol tri-acrylate; an aliphatic monoester or polyester having at least one hydroxyl group, which is selected from the group consisting of 2-hydroxy ethyl acetate, methyl 3 hydroxy butylate, ethyl 3-hydroxy butylate, methyl 2-hydroxy isobutylate, ethyl 2-hydroxy isobutylate, methyl-3-hydroxy-2-methyl propionate, 2,2-dimethyl-3-hydroxy propionate, ethyl-6-hydroxy hexanoate, t-butyl-2-hydroxy isobutylate, diethyl-3-hydroxy glutarate, ethyl lactate, isopropyl lactate, butyl isobutyl lactate, isobutyl lactate, ethyl mandelate, dimethyl ethyl tartrate, ethyl tartrate, dibutyl tartrate, diethyl citrate, triethyl citrate, ethyl-2-hydroxy-caproate, and diethyl bis-(hydroxymethyl) malonate; an aromatic ester having at least one hydroxyl group, which is selected from the group consisting of 2-hydroxy ethyl benzoate, 2-hydroxy ethyl salicylate, methyl-4-(hydroxy methyl) benzoate, methyl-4-hydroxy benzoate, ethyl-3-hydroxy benzoate, 4-methyl salicylate, ethyl salicylate, phenyl salicylate, propyl-4-hydroxy benzoate, phenyl 3-hydroxy naphthanoate, monoethylene glycol monobenzoate, diethylene glycol monobenzoate, and triethylene glycol monobenzoate; and an alicyclic ester having at least one hydroxyl group such as hydroxy butyl lactone; and wherein said silicon compound having at least one alkoxy group is selected from the group consisting of dimethyldimethoxysilane, dimethyldiethoxysilane, diphenyldimethoxysilane, methylphenylinethoxysilane, diphenyldiethoxysilane, ethyltrimethoxysilane, vinyltrlmethoxysilane, methyltrimethoxysilane, phenyltrimethoxysilane, methyltriethoxysilane, ethyltriethoxysilane, vinyltriethoxysilane, butyltriethoxysilane, phenyltriethoxysilane, ethyltriisopropoxysilane, vinyltributoxysilane, ethylsilicate, butylsilicate, and methyltriaryloxysilane.

4. The method for producing a catalyst for homo- or co-polymerization of ethylene according to Claim 1, wherein said titanium compound is represented by a general formula of Ti(OR)ₐX₄₋ₐ, where R stands for a hydrocarbon group, X for a halogen atom, and a for a natural number of 0 ∼ 4; and wherein said silicon compound is represented by a general formula of RₙSiCl₄₋ₙ, where R stands for hydrogen; an alkyl, alkoxy, haloalkyl, or aryl group having 1∼10 carbons; or a halosilyl or halosilylalkyl group having 1∼8 carbons; and n for a natural number of 0 ∼ 3.

5. The method for producing a catalyst for homo- or co-polymerization of ethylene according to Claim 4, wherein said titanium compound is a 4-halogenated titanium, which is selected from the group consisting of TiCl₄, TiBr₄, and TiI₄; a 3-halogenated alkoxytitanium, which is selected from the group consisting of Ti(OCH₃)Cl₃, Ti(OC₂H₅)Cl₃, Ti(OC₂H₅)Br₃, and Ti(O(i-C₄H₉)Br₃; a 2-halogenated alkoxytitanium, which is selected from the group consisting of Ti(OCH₃)₂Cl₂, Ti(OC₂H₅)₂Cl₂, Ti(O(i-C₄H₉))₂Cl₂, and Ti(OC₂H₅)₂Br₂; and a tetralkoxytitanium, which is selected from the group consisting of Ti(OCH₃)₄, Ti(OC₂H₅)₄, and Ti(OC₄H₉)₄; or mixtures thereof; and wherein said silicon compound is a trichlorosilane, which is selected from the group consisting of silicon tetrachloride, methyltrichlorosilane, ethyltrichlorosilane, and phenyl-trichlorosilane; a dichlorosilane, which is selected from the group consisting of dimethylchlorosilane, diethyldichlorosilane, diphenyldichlorosilane, and methylphenyldichlorosilane; a monochlorosilane such as trimethylchlorosilane; or mixtures thereof.

6. The method for producing a catalyst for homo- or co-polymexization of ethylene according to Claim 1, wherein said titanium compound is titanium tetrachloride, and said silicon compound is silicon tetrachloride.

## Patentansprüche

1. Verfahren zur Herstellung eines Katalysators für die Homo- oder Copolymerisation von Ethylen, umfassend die folgenden Schritte:
(i) Darstellung einer Magnesiumlösung durch Kontaktreaktion einer halogenierten Magnesiumverbindung mit Alkohol und anschließender Zugabe von Mineralöl;
(ii) Reaktion der Lösung mit einer Esterverbindung mit zumindest einer Hydroxylgruppe und einer Siliciumverbindung mit zumindest einer Alkoxygruppe; und
(iii) Reaktion der Lösung mit einer Mischung aus einer Titanverbindung und einer Siliciumverbindung.

2. Verfahren zur Herstellung eines Katalysators für die Homo- oder Copolymerisation von Ethylen nach Anspruch 1, **dadurch gekennzeichnet, daß** es sich bei dem Mineralöl um Weißöl, paraffinhaltiges Kohlenwasserstofföl oder Siliciumöl handelt.

3. Verfahren zur Herstellung eines Katalysators für die Homo- oder Copolymerisation von Ethylen nach Anspruch 1, **dadurch gekennzeichnet, daß** es sich bei der Esterverbindung mit zumindest einer Hydroxylgruppe um einen Ester einer ungesättigten Fettsäure mit zumindest einer Hydroxylgruppe handelt, der aus der Gruppe gewählt wird, die 2-Hydroxyethylacrylat, 2-Hydroxyethylmethacrylat, 2-Hydroxypropylacrylat, 2-Hydroxypropylmethacrylat, 4-Hydroxybutylacrylat und Pentaerythritoltriacrylat umfaßt; um einen aliphatischen Monoester oder Polyester mit zumindest einer Hydroxylgruppe, der aus der Gruppe gewählt wird, die 2-Hydroxyethylacetat, Methyl-3-Hydroxybutylat, Ethyl-3-Hydroxybutylat, Methyl-2-Hydroxyisobutylat, Ethyl-2-Hydroxyisobutylat, Methyl-3-Hydroxy-2-Methylpropionat, 2,2-Dimethyl-3-Hydroxypropionat, Ethyl-6-Hydroxyhexanoat, t-Butyl-2-Hydroxyisobutylat, Diethyl-3-Hydroxyglutarat, Ethyllactat, Isopropyllactat, Butylisobutyllactat, Isobutyllactat, Ethylmandelat, Dimethylethyltartrat, Ethyltartrat, Dibutyltartrat, Diethylcitrat, Triethylcitrat, Ethyl-2-Hydroxy-Caproat und Diethyl-bis-(Hydroxymethyl)malonat umfaßt; um einen aromatischen Ester mit zumindest einer Hydroxylgruppe, der aus der Gruppe gewählt wird, die 2-Hydroxyethylbenzoat, 2-Hydroxyethylsalicylat, Methyl-4-(Hydroxymethyl)benzoat, Methyl-4-Hydroxybenzoat, Ethyl-3-Hydroxybenzoat, 4-Methylsalicylat, Ethylsalicylat, Phenylsalicylat, Propyl-4-Hydroxybenzoat, Phenyl-3-Hydroxynaphtanoat, Monoethylenglykolmonobenzoat, Diethylenglykolmonobenzoat und Triethylenglykolmonobenzoat umfaßt; und um einen alizyklischen Ester mit zumindest einer Hydroxylgruppe, wie beispielsweise Hydroxybutyllacton; und **dadurch gekennzeichnet, daß** die Siliciumverbindung mit zumindest einer Alkoxygruppe aus der Gruppe gewählt wird, die Dimethyldimethoxysilan, Dimethyldiethoxysilan, Diphenyldimethoxysilan, Methylphenylmethoxysilan, Diphenyldiethoxysilan, Ethyltrimethoxysilan, Vinyltrimethoxysilan, Methyltrimethoxysilan, Phenyltrimethoxysilan, Methyltriethoxysilan, Ethyltriethoxysilan, Vinyltriethoxysilan, Butyltriethoxysilan, Phenyltriethoxysilan, Ethyltriisopropoxysilan, Vinyltributoxysilan, Ethylsilicat, Butylsilicat und Methyltriaryloxysilan umfaßt.

4. Verfahren zur Herstellung eines Katalysators für die Homo- oder Copolymerisation von Ethylen nach Anspruch 1, **dadurch gekennzeichnet, daß** die Titanverbindung durch die allgemeine Formel Ti(OR)ₐX₄₋ₐ, dargestellt wird, wobei es sich bei R um eine Kohlenwasserstoffgruppe, bei X um ein Halogenatom und bei a um eine natürliche Zahl von 0-4 handelt; und **dadurch**, daß die Siliciumverbindung durch die allgemeine Formel RₙSiCl₄₋ₙ dargestellt wird, wobei R für Wasserstoff, eine Alkyl-, Alkoxy-, Halogenalkyl- oder Arylgruppe mit 1~10 Kohlenstoffatomen oder für eine Halogensilyl- oder Halogensilylalkylgruppe mit 1~8 Kohlenstoffatomen steht und n für eine natürliche Zahl von 0∼3.

5. Verfahren zur Herstellung eines Katalysators für die Homo- oder Copolymerisation von Ethylen nach Anspruch 4, **dadurch gekennzeichnet, daß** es sich bei der Titanverbindung um ein vierfach halogeniertes Titan handelt, das aus der Gruppe gewählt wird, die TiCl₄, TiBr₄ und TiJ₄ umfaßt, um ein dreifach halogeniertes Alkoxytitan, das aus der Gruppe gewählt wird, die Ti(OCH₃)Cl₃, Ti(OC₂H₅)Cl₃, Ti(OC₂H₅)Br₃ und Ti(O(i-C₄H₉))Br₃ umfaßt, um ein zweifach halogeniertes Alkoxytitan, das aus der Gruppe gewählt wird, die Ti(OCH₃)₂Cl₂, Ti(OC₂H₅)₂Cl₂, Ti(O(i-C₄H₉))₂Cl₂ und Ti(OC₂H₅)₂Br₂ umfaßt, und um ein Tetraalkoxytitan, das aus der Gruppe gewählt wird, die Ti(OCH₃)₄, Ti(OC₂H₅)₄ und Ti(OC₄H₉)₄ umfaßt, oder um Mischungen aus diesen; und **dadurch**, daß es sich bei der Siliciumverbindung um ein Trichlorsilan handelt, das aus der Gruppe gewählt wird, die Siliciumtetrachlorid, Methyltrichlorsilan, Ethyltrichlorsilan und Phenyltrichlorsilan umfaßt; um ein Dichlorsilan, das aus der Gruppe gewählt wird, die Dimethylchlorsilan, Diethyldichlorsilan, Diphenyldichlorsilan und Methylphenyldichlorsilan umfaßt; um ein Monochlorsilan wie Trimethylchlorsilan; oder Mischungen aus diesen.

6. Verfahren zur Herstellung eines Katalysators für die Homo- oder Copolymerisation von Ethylen nach Anspruch 1, **dadurch gekennzeichnet, daß** es sich bei der Titanverbindung um Titantetrachlorid und bei der Siliciumverbindung um Siliciumtetrachlorid handelt.

## Revendications

1. Méthode pour la production d'un catalyseur pour l'homo- ou la co-polymérisation de l'éthylène qui comprend les étapes de:
(i) préparer une solution de magnésium par réaction par contact d'un composé de magnésium halogéné avec un alcool puis addition d'une huile minérale;
(ii) réaction de ladite solution avec un composé d'ester ayant un moins groupe hydroxyle et un composé de silicium ayant au moins un groupe alcoxy; et
(iii) faire réagir ladite solution avec un mélange d'un composé de titane et d'un composé de silicium.

2. Méthode de production d'un catalyseur pour l'homo ou la co-polymérisation de l'éthylène selon la revendication 1 où ladite huile minérale est de l'huile blanche, une huile d'hydrocarbure paraffinique ou une huile de silicone.

3. Méthode de production d'un catalyseur pour l'homo- ou la co-polymérisation de l'éthylène selon la revendication 1, où ledit composé d'ester ayant au moins un groupe hydroxyle est un ester d'acide aliphatique insaturé ayant un moins un groupe hydroxyle, qui est sélectionné dans le groupe consistant en 2-hydroxy éthylacrylate, 2-hydroxy éthylmétacrylate, 2-hydroxy propyl acrylate, 2-hydroxy propyl méthacrylate, 4-hydroxy butylacrylate, et pentaérythritol triacrylate; un monoester ou polyester aliphatique ayant au moins un groupe hydroxyle, qui est sélectionné dans le groupe consistant en acétate de 2-hydroxy éthyle, butylate de 3-hydroxy méthyle, 3-hydroxy butylate d'éthyle, 2-hydroxy isobutylate de méthyle, 2-hydroxy isobutylate d'éthyle, méthyl-3-hydroxy-2-méthyl propionate, 2,2-diméthyl-3-hydroxy propionate, éthyl-6-hydroxy hexanoate, t-butyl-2 hydroxy isobutylate, diéthyl-3-hydroxy glutarate, lactate d'éthyle, lactate d'isopropyle, butyl isobutyl lactate, mandélate d'éthyle, diméthyl éthyl tartrate, tartrate d'éthyle, dibutyl tartrate, diéthyl citrate, triéthyl citrate, éthyl-2-hydroxy-caproate et diéthyl bis-(hydroxyméthyl) malonate; un ester aromatique ayant au moins un groupe hydroxyle, qui est sélectionné dans le groupe consistant en 2-hydroxy éthyl benzoate, 2-hydroxy éthyl salicylate, méthyle-4-(hydroxy méthyl) benzoate, éthyl-3-hydroxy benzoate, 4-méthyl salicylate, salicylate d'éthyle, salicylate de phényle, propyle-4-hydroxy benzoate, phényle 3-hydroxy naphtanoate, monobenzoate de monoéthylène glycol, monobenzoate de diéthylène glycol, et monobenzoate de triéthylène glycol; et un ester alicyclique ayant au moins un groupe hydroxyle comme hydroxy butyl lactone; et où ledit composé de silicium ayant au moins un groupe alcoxy est sélectionné dans le groupe consistant en diméthyldiméthoxysilane, diméthyldiéthoxysilane, diphényldiméthoxysilane, méthylphénylméthoxysilane, diphényldiéthoxysilane, éthyltriméthoxysilane, vinyltriméthoxysilane, méthyltriméthoxysilane, phényltriméthoxysilane, méthyltriéthoxysilane, éthyltriéthoxysilane, vinyltriéthoxysilane, butyltriéthoxysilane, phényltriéthoxysilane, éthyltriisoproproxysilane, vinyltributoxsilane, éthylsilicate, butylsilicate et méthyltriaryloxysilane.

4. Méthode de production d'un catalyseur pour l'homo- ou la co-polymérisation de l'éthylène selon la revendication 1, où ledit composé de titane est représenté par une formule générale de Ti(OR)ₐX₄₋ₐ, où R indique un groupe hydrocarbure, X indique un atome d'halogène et a un nombre naturel de 0~4; et où ledit composé de silicium est représenté par une formule générale de RₙSiCl₄₋ₙ où R indique hydrogène; un groupe alkyle, alcoxy, haloalkyle, ou aryle ayant 1~10 carbones; ou un groupe halosilyle ou halosilylalkyle ayant 1~8 carbones; et n indique un nombre naturel de 0 à 3.

5. Méthode de production d'un catalyseur pour l'homo- ou la co-polymérisation de l'éthylène selon la revendication 4 où ledit composé de titane est un titane 4-halogéné, qui est sélectionné dans le groupe consistant en TiCl₄, TiBr₄ et TiI₄ ; un alcoxytitane 3-halogéné qui est sélectionné dans le groupe consistant en Ti(OCH₃)Cl₃, Ti(OC₂H₅)Cl₃, Ti(OC₂H₅)Br₃ et Ti(O(i-C₄H₉)Br₃; un alcoxytitane 2-halogéné, qui est sélectionné dans le groupe consistant en Ti(OCH₃)₂Cl₂, Ti(OC₂H₅)₂Cl₂, Ti (O(i-C₄H₉))₂Cl₂ et Ti(OC₂H₅)₂Br₂; et un tétraalcoxytitane qui est sélectionné dans le groupe consistant en Ti(OCH₃)₄, Ti(OC₂H₅)₄ et Ti(OC₄H₉)₄; ou leurs mélanges; et où ledit composé de silicium est un trichlorosilane, qui est sélectionné dans le groupe consistant en tétrachlorure de silicium, méthyltrichlorosilane, éthyltrichlorosilane et phényltrichlorosilane; un dichlorosilane qui est sélectionné dans le groupe consistant en diméthylchlorosilane, diéthyldichlorosilane, diphényldichlorosilane et méthylphényldichlorosilane; un monochlorosilane tel que triméthylchlorosylane ou leurs mélanges.

6. Méthode de production d'un catalyseur pour l'homo- ou la co-polymérisation de l'éthylène selon la revendication 1 où ledit composé de titane est le tétrachlorure de titane et ledit composé de silicium est le tétrachlorure de silicium.
